# EUROPEAN PATENT APPLICATION

(11) **EP 4 668 448 A1**
(43) Date of publication of application: **24.12.2025**
(21) Application number: 24887359.8
(22) Date of filing: 29.05.2024
(51) Int. Cl.: H01M 50/30, H01M 50/247, H01M 50/249, H01M 50/474

(54) **BATTERY CELL, BATTERY, AND ELECTRIC DEVICE**

(30) Priority: 07.11.2023 CN 202322996048 U
(71) Applicant: Contemporary Amperex Technology Co., Limited, Ningde, Fujian 352100 (CN)
(72) Inventor: CHEN, Shengwang, Ningde, Fujian 352100 (CN); HUANG, Shaobin, Ningde, Fujian 352100 (CN); GUO, Zhijun, Ningde, Fujian 352100 (CN); WANG, Peng, Ningde, Fujian 352100 (CN)
(74) Representative: Lorenz Seidler Gossel Part. mbB
(86) International application number: PCT/CN2024/096017
(87) International publication number: WO 2025/097735

(57) **Abstract**

A battery cell (6), a battery (2), and an electric device. The battery cell (6) comprises a housing (20), an electrode assembly (10), a pressure relief mechanism (40), and a first insulating member (50), wherein the housing (20) comprises a wall portion (211); and the electrode assembly (10) is accommodated in the housing (20). The pressure relief mechanism (40) is arranged on the wall portion (211), and the pressure relief mechanism (40) comprises a pressure relief body (411) and a first weak portion (412) arranged around the pressure relief body (411), the pressure relief body (411) and the first weak portion (412) forming a first pressure relief area (41). At least part of the first insulating member (50) is arranged between the first pressure relief area (41) and the electrode assembly (10), the first insulating member (50) is provided with a first through hole (511), and in the direction of thickness of the wall portion (211), the projection of the first through hole (511) is located in the projection of the first pressure relief area (41).

## Description

### CROSS-REFERENCE TO RELATED APPLICATION

The present application claims priority to Chinese Patent Application No. 202322996048.X filed on November 7, 2023 and entitled "BATTERY CELL, BATTERY, AND ELECTRIC DEVICE", the content of which is incorporated herein by reference in its entirety.

### TECHNICAL FIELD

The present application relates to the field of batteries, and in particular, to a battery cell, a battery, and an electric device.

### BACKGROUND

Battery cells are widely used in electronic devices, such as mobile phones, laptop computers, electric bicycles, electric vehicles, electric airplanes, electric ships, electric toy cars, electric toy ships, electric toy airplanes, and electric tools.

How to improve the reliability of battery cells serves as a key focus of research in battery technology.

### SUMMARY

The present application provides a battery cell, a battery, and an electric device, which can improve the reliability of the battery cell.

In a first aspect, the present application provides a battery cell. The battery cell includes a shell, an electrode assembly, a pressure relief mechanism, and a first insulating member. The shell includes a wall part. The electrode assembly is accommodated in the shell. The pressure relief mechanism is disposed on the wall part. The pressure relief mechanism includes a pressure relief body and a first weak part disposed around the pressure relief body, and the pressure relief body and the first weak part form a first pressure relief zone. At least part of the first insulating member is disposed between the first pressure relief zone and the electrode assembly, the first insulating member is provided with a first through hole, and in a thickness direction of the wall part, a projection of the first through hole is located within a projection of the first pressure relief zone.

The first insulating member can insulate and isolate part of the first pressure relief zone from the electrode assembly, so as to reduce the risk of electrical conduction between the first pressure relief zone and the electrode assembly, thereby improving reliability. When thermal runaway occurs in the electrode assembly and high-temperature and high-pressure substances are released, the high-temperature and high-pressure substances can pass through the first through hole and act on the first pressure relief zone, so as to cause the first weak part to rapidly rupture and form a pressure relief channel, thereby relieving pressure in time and reducing the risk of explosion. When the high-temperature and high-pressure substances pass through the first through hole, the high temperature acts on the hole wall of the first through hole and melts the first insulating member, so as to increase the liquid passage area of the first through hole and improve the discharge efficiency of the high-temperature and high-pressure substances, thereby improving the reliability of the battery cell.

In some embodiments, in the thickness direction, the first insulating member separates the first weak part from the electrode assembly.

In some embodiments, the battery cell further includes a blocking member; in the thickness direction, the blocking member is located between the first insulating member and the first pressure relief zone, and the projection of the first through hole is located within a projection of the blocking member.

The blocking member can block the active substance shedding from the electrode assembly and reduce the risk that the active substance layer comes into contact with the first pressure relief zone via the first through hole, so as to reduce the risk of corrosion of the first weak part and failure of the pressure relief mechanism, thereby improving the reliability of the battery cell. When thermal runaway occurs in the battery cell, the blocking member can be discharged to the outside of the battery cell via the pressure relief channel formed by the first pressure relief zone, which has little influence on the discharge of high-temperature substances.

In some embodiments, the blocking member is connected to the first insulating member.

When the battery cell is subjected to an external impact, the first insulating member can limit the blocking member, so as to reduce the relative displacement between the blocking member and the first through hole, and reduce the risk of opening the first through hole, thereby improving the reliability of the battery cell. When thermal runaway occurs in the battery cell, the blocking member is disconnected from the first insulating member under the internal pressure of the battery cell, thereby discharging to the outside of the battery cell via the pressure relief channel formed by the first pressure relief zone.

In some embodiments, the first insulating member is further provided with a second weak part spaced apart from the first through hole, and in the thickness direction, a projection of the second weak part is located within the projection of the first pressure relief zone.

When thermal runaway occurs in the battery cell and high-temperature and high-pressure substances are released, the second weak part can rupture under the impact of the high-temperature and high-pressure substances, thereby forming a channel in the first insulating member for the high-temperature and high-pressure substances to pass through. By providing the first insulating member with both the first through hole and the second weak part, the first insulating member can rupture in a more timely manner when thermal runaway occurs in the battery cell, so as to reduce the blockage of the high-temperature and high-pressure substances by the first insulating member, improve the relief efficiency, and mitigate potential safety hazards, thereby improving the reliability of the battery cell.

In some embodiments, the first insulating member includes a first insulating part and a second insulating part, and the second weak part connects the first insulating part and the second insulating part. In the thickness direction, at least part of the first insulating part is located between the electrode assembly and the pressure relief body, and at least part of the second insulating part is located between the wall part and the electrode assembly. The first through hole is disposed in the first insulating part.

When the high-temperature and high-pressure substances released by the electrode assembly act on the second weak part, the second weak part ruptures, causing the first insulating part to disconnect from the second insulating part and detach from the second insulating part, thereby forming a channel in the first insulating member for the high-temperature and high-pressure substances to pass through. The first through hole is disposed in the first insulating part. When the high-temperature and high-pressure substances pass through the first through hole, the first insulating part is easy to melt and deform, thereby accelerating the rupture of the second weak part. The second insulating part can insulate and isolate the wall part from the electrode assembly, so as to reduce the risk of electrical conduction between the positive electrode and the negative electrode of the electrode assembly due to the wall part, thereby improving reliability.

In some embodiments, in the thickness direction, a projection of the first insulating part is located within the projection of the first pressure relief zone. When thermal runaway occurs in the battery cell, the first insulating part can be discharged to the outside of the battery cell via the pressure relief channel formed by the first pressure relief zone after the rupture of the second weak part, so as to reduce the blockage of the high-temperature and high-pressure substances by the first insulating part, thereby improving the pressure relief efficiency.

In some embodiments, in the thickness direction, the projection of the first insulating part and the projection of the second weak part are both located within a projection of the pressure relief body. According to the embodiments of the present application, when thermal runaway occurs in the battery cell, the risk that the pressure relief mechanism blocks the first insulating part can be reduced, thereby enabling the first insulating part to be discharged in time to the outside of the battery cell via the pressure relief channel formed by the first pressure relief zone.

In some embodiments, the first insulating member is provided with a plurality of second through holes and a plurality of second weak parts, and the plurality of second through holes and the plurality of second weak parts are alternately arranged along an outer periphery of the first insulating part. By forming a plurality of second through holes in the first insulating member, the strength of the plurality of second weak parts can be reduced, thereby enabling the first insulating member to rupture in a specified zone.

In some embodiments, the second through hole is a rectangular hole, a length t1 of the second through hole ranges from 0.2 mm to 5 mm, and a width t2 of the second through hole ranges from 0.1 mm to 1 mm. According to the embodiments of the present application, the number of second through holes can be reduced, the forming process can be simplified, and the risk that active substance shedding from the electrode assembly passes through the second through hole can be reduced.

In some embodiments, along a circumferential direction of the first insulating part, a minimum distance D₁ between two adjacent second through holes ranges from 0.5 mm to 5 mm.

D₁ is positively correlated with the strength of the second weak part. By defining D₁ to be greater than or equal to 0.5 mm, the risk that the second weak part breaks when the battery cell is subjected to an external impact can be reduced. By defining D₁ to be less than or equal to 5 mm, the second weak part can break in time when thermal runaway occurs in the battery cell.

In some embodiments, the first insulating part, the plurality of second weak parts, and the plurality of second through holes form a second pressure relief zone. In a length direction of the wall part, a maximum dimension of the first pressure relief zone is L mm, a maximum dimension of the second pressure relief zone is L₁ mm, and L and L₁ satisfy: L - 4 ≤ L₁ ≤ L.

By setting L₁ to be greater than or equal to L - 4, the liquid passage area of the channel formed by the second pressure relief zone can be increased when thermal runaway occurs in the battery cell. According to the embodiments of the present application, by setting L₁ to be less than or equal to L, the first insulating part can be discharged in time from the pressure relief channel formed by the first pressure relief zone when thermal runaway occurs in the battery cell.

In some embodiments, in a width direction of the wall part, a maximum dimension of the first pressure relief zone is W mm, a maximum dimension of the second pressure relief zone is W₁ mm, and W and W₁ satisfy: W - 4 ≤ W₁ ≤ W.

By setting W₁ to be greater than or equal to W-4, the liquid passage area of the channel formed by the second pressure relief zone can be increased when thermal runaway occurs in the battery cell. According to the embodiments of the present application, by setting W₁ to be less than or equal to W, the first insulating part can be discharged in time from the pressure relief channel formed by the first pressure relief zone when thermal runaway occurs in the battery cell.

In some embodiments, in the width direction of the wall part, the maximum dimension of the first pressure relief zone is W mm, and a diameter of the first through hole is d₁ mm. W and d₁ satisfy: d₁ ≤ W - 1. According to the embodiments of the present application, the risk that the zone of the pressure relief mechanism other than the first pressure relief zone is aligned with the first through hole due to assembly error can be reduced, and the loss of the insulating area of the first insulating member can be reduced, thereby improving the insulating property.

In some embodiments, the battery cell further includes a second insulating member; in the thickness direction, at least part of the second insulating member is located between the first insulating member and the electrode assembly. The second insulating member is provided with a third through hole, and in the thickness direction, the first through hole is aligned with and in communication with the third through hole along the thickness direction.

The first insulating member and the second insulating member can achieve the effect of dual-layer insulation to reduce the risk of short circuit, thereby improving the reliability of the battery cell. When thermal runaway occurs in the electrode assembly and high-temperature and high-pressure substances are released, the high-temperature and high-pressure substances can pass through the third through hole and the first through hole and act on the first pressure relief zone, so as to cause the first weak part to rupture and form a pressure relief channel, thereby relieving pressure in time and reducing the risk of explosion. When the high-temperature and high-pressure substances pass through the third through hole, the high temperature acts on the hole wall of the third through hole and melts the second insulating member, so as to increase the liquid passage area of the third through hole and improve the discharge efficiency of the high-temperature and high-pressure substances, thereby improving the reliability of the battery cell.

In some embodiments, the second insulating member further includes a third weak part spaced apart from the third through hole. In the thickness direction, a projection of the third weak part is located within the projection of the first pressure relief zone.

When thermal runaway occurs in the battery cell and high-temperature and high-pressure substances are released, the third weak part can rupture under the impact of the high-temperature and high-pressure substances, thereby forming a channel in the second insulating member for the high-temperature and high-pressure substances to pass through. By providing the second insulating member with both the third through hole and the third weak part, the second insulating member can rupture in a more timely manner when thermal runaway occurs in the battery cell, so as to reduce the blockage of the high-temperature and high-pressure substances by the second insulating member, improve the relief efficiency, and mitigate potential safety hazards, thereby improving the reliability of the battery cell.

In some embodiments, the first insulating member includes a first insulating part, a second insulating part, and a second weak part; the second weak part connects the first insulating part and the second insulating part, and the first through hole is disposed in the first insulating part; the second insulating member includes a third insulating part and a fourth insulating part, and the third weak part connects the third insulating part and the fourth insulating part. The third insulating part is disposed between the first insulating part and the electrode assembly, and the third insulating part is provided with the third through hole.

When the electrode assembly releases high-temperature and high-pressure substances, the third weak part, the second weak part, and the first weak part rupture, and thus the first insulating part and the third insulating part can be discharged to the outside of the battery cell via the pressure relief channel formed by the first pressure relief zone, so as to reduce the blockage of high-temperature and high-pressure substances by the first insulating part and the third insulating part, thereby improving the pressure relief efficiency.

In some embodiments, the fourth insulating part and the second insulating part are stacked and connected in the thickness direction. The fourth insulating part and the second insulating part are connected, such that the first insulating member and the second insulating member are limited relative to each other, thereby reducing the risk of misalignment between the first insulating part and the third insulating part when the battery cell is subjected to an external impact.

In some embodiments, the first insulating member is further provided with the second weak part spaced apart from the first through hole. In the thickness direction, the projection of the second weak part coincides with the projection of the third weak part, such that when thermal runaway occurs, the risk that the first insulating member blocks the third insulating part is reduced, thereby enabling the third insulating part to be discharged to the outside of the battery cell in time.

In some embodiments, the first through hole and the third through hole are coaxially arranged. The first through hole and the third through hole may serve as positioning references to facilitate the assembly between the first insulating member and the second insulating member.

In some embodiments, the first insulating member is provided with an accommodating cavity, at least part of the electrode assembly is accommodated in the accommodating cavity, and the second insulating member is configured to support the electrode assembly. In some other embodiments, the second insulating member is provided with an accommodating cavity, at least part of the electrode assembly is accommodated in the accommodating cavity, and the first insulating member is configured to support the electrode assembly.

One of the first insulating member and the second insulating member can wrap around the electrode assembly from all sides, so as to reduce the risk of electrical conduction between the electrode assembly and the shell body due to metal particles, thereby improving reliability. When the battery cell is subjected to an external impact, the other one of the first insulating member and the second insulating member can reduce the shaking amplitude of the electrode assembly inside the shell, thereby reducing the risk of powder shedding from the electrode plate of the electrode assembly (i.e., detachment of active substance from the electrode plate) due to compression against the shell.

In a second aspect, the present application provides a battery. The battery includes a plurality of battery cells according to any one of the embodiments of the first aspect.

In a third aspect, the present application provides an electric device. The electric device includes the battery according to any embodiment of the second aspect. The battery is configured to provide electric energy.

### BRIEF DESCRIPTION OF THE DRAWINGS

Features, advantages, and technical effects of exemplary embodiments of the present application will be described below with reference to the drawings.
FIG. 1 is a structural schematic view of a vehicle according to some embodiments of the present application;
FIG. 2 is an exploded schematic view of a battery according to some embodiments of the present application;
FIG. 3 is a structural schematic view of a battery cell according to some embodiments of the present application;
FIG. 4 is an exploded schematic view of the battery cell shown in FIG. 3;
FIG. 5 is a partial cross-sectional schematic view of a battery cell according to some embodiments of the present application;
FIG. 6 is an enlarged view of the boxed portion in FIG. 5;
FIG. 7 is an enlarged view of the circled portion in FIG. 6;
FIG. 8 is a schematic view from a top view of a pressure relief mechanism of a battery cell according to some embodiments of the present application;
FIG. 9 is a partial cross-sectional view taken along the direction of A-A in FIG. 8;
FIG. 10 is a schematic view of a first insulating member of a battery cell according to some embodiments of the present application;
FIG. 11 is an enlarged view of the boxed portion in FIG. 10;
FIG. 12 is an enlarged view of the circled portion in FIG. 11;
FIG. 13 is a schematic view of a second insulating member of a battery cell according to some embodiments of the present application;
FIG. 14 is an enlarged view of the boxed portion in FIG. 13; and
FIG. 15 is an enlarged view of the circled portion in FIG. 14.

The reference numerals are as follows:
1, vehicle; 2, battery; 3, controller; 4, motor; 5, case; 5a, first case part; 5b, second case part; 5c, accommodating space; 6, battery cell;
10, electrode assembly;
20, shell; 21, shell body; 211, wall part; 212, pressure relief hole; 22, end cover;
30, electrode terminal;
40, pressure relief mechanism; 41, first pressure relief zone; 411, pressure relief body; 412, first weak part; 42, connecting part;
50, first insulating member; 51, first insulating part; 511, first through hole; 52, second weak part; 53, second insulating part; 54, second through hole; 501, accommodating cavity; 50a, second pressure relief zone;
60, blocking member;
70, second insulating member; 71, third insulating part; 711, third through hole; 72, third weak part; 73, fourth insulating part; 74, fourth through hole; 70a, third pressure relief zone;
X, thickness direction; Y, width direction; and Z, length direction.

### DETAILED DESCRIPTION

To make the objectives, technical solutions, and advantages of embodiments of the present application clearer, the technical solutions in the embodiments of the present application will be clearly and comprehensively described hereinafter with reference to the drawings in the embodiments of the present application. It is obvious that the described embodiments are some, but not all, embodiments of the present application. Based on the embodiments in the present application, all other embodiments obtained by those of ordinary skill in the art without creative work shall fall within the protection scope of the present application.

To make the objectives, technical solutions, and advantages of embodiments of the present application clearer, the technical solutions in the embodiments of the present application will be clearly described hereinafter with reference to the drawings in the embodiments of the present application. It is obvious that the described embodiments are some, but not all, embodiments of the present application. Based on the embodiments in the present application, all other embodiments obtained by those of ordinary skill in the art without creative work shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", "has", "provide with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the aforementioned terms in the present application can be understood according to specific conditions.

In the present application, the term "and/or" is only an association relationship that describes the associated objects, and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not impose any limitation on the present application.

The term "plurality of" used in the present application refers to no less than two (including two).

In the embodiments of the present application, the battery cell may be a secondary battery cell. The secondary battery cell refers to a battery cell that can be reused by activating the active material through charging after the battery cell is discharged.

The battery cell may be a lithium-ion battery cell, a sodium-ion battery cell, a sodium-lithium-ion battery cell, a lithium metal battery cell, a sodium metal battery cell, a lithium-sulfur battery cell, a magnesium-ion battery cell, a nickel-hydrogen battery cell, a nickel-cadmium battery cell, a lead storage battery cell, or the like. This is not limited in the embodiments of the present application.

The battery cell generally includes an electrode assembly. The electrode assembly includes a positive electrode, a negative electrode, and a separator. During the charging and discharging process of the battery cell, active ions (such as lithium ions) are intercalated and deintercalated back and forth between the positive electrode and the negative electrode. The separator is disposed between the positive electrode and the negative electrode to prevent the positive electrode and the negative electrode from short-circuiting while allowing the passage of active ions.

In some embodiments, the positive electrode may be a positive electrode plate, and the positive electrode plate may include a positive electrode current collector and a positive electrode active material disposed on at least one surface of the positive electrode current collector.

As an example, the positive electrode current collector has two surfaces opposite to each other in a thickness direction thereof, and the positive electrode active material is disposed on either or both of the two opposite surfaces of the positive electrode current collector.

As an example, a metal foil or a composite current collector may be used as the positive electrode current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material base layer and a metal layer. The composite current collector may be fabricated by forming a metal material (aluminum, aluminum alloy, nickel, nickel alloy, titanium, titanium alloy, silver, silver alloy, and the like) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for batteries may also be used. These positive electrode active materials may be used alone or in combination of two or more. Examples of the lithium-containing phosphate may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), a lithium nickel cobalt aluminum oxide (such as LiNi_{0.80}Co_{0.15}Al_{0.05}O₂), and modified compounds thereof.

In some embodiments, the foam metal may be used as the positive electrode. The foam metal may be foam nickel, foam copper, foam aluminum, foam alloy, foam carbon, or the like. When the foam metal is used as the positive electrode, the surface of the foam metal may not be provided with the positive electrode active material. Certainly, the positive electrode active material may also be provided. As an example, a lithium source material, a potassium metal, or a sodium metal may also be incorporated into or/and deposited in the foam metal; the lithium source material is a lithium metal and/or a lithium-rich material.

In some embodiments, the negative electrode may be a negative electrode plate, and the negative electrode plate may include a negative electrode current collector.

As an example, a metal foil, a foam metal, or a composite current collector may be used as the negative electrode current collector. For example, for the metal foil, aluminum or stainless steel treated with silver on the surface, stainless steel, copper, aluminum, nickel, carbon electrode, carbon, nickel, titanium, or the like may be used. The foam metal may be foam nickel, foam copper, foam aluminum, foam alloy, foam carbon, or the like. The composite current collector may include a polymer material base layer and a metal layer. The composite current collector may be fabricated by forming a metal material (copper, copper alloy, nickel, nickel alloy, titanium, titanium alloy, silver, silver alloy, and the like) on a polymer material substrate (such as a substrate made of polypropylene, polyethylene terephthalate, polybutylene terephthalate, polystyrene, and polyethylene).

As an example, the negative electrode plate may include a negative electrode current collector and a negative electrode active material disposed on at least one surface of the negative electrode current collector.

As an example, the negative electrode current collector has two surfaces opposite to each other in a thickness direction thereof, and the negative electrode active material is disposed on either or both of the two opposite surfaces of the negative electrode current collector.

As an example, the negative electrode active material may be a negative electrode active material known in the art for use in battery cells. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the material of the positive electrode current collector may be aluminum, and the material of the negative electrode current collector may be copper.

In some embodiments, the electrode assembly further includes a separator. The separator is disposed between the positive electrode and the negative electrode.

In some embodiments, the separator is a separation film. The present application does not particularly limit the type of the separation film, and any porous-structure separation film known to have good chemical stability and mechanical stability may be selected.

As an example, the main material of the separation film may be selected from at least one of glass fiber, non-woven fabric, polyethylene, polypropylene, polyvinylidene difluoride, and ceramic. The separation film may be a single-layer film or a multi-layer composite film, and there is no particular limitation on this. When the separation film is a multi-layer composite film, the materials of the layers may be the same or different, and there is no particular limitation on this. The separator may be a separate component located between the positive electrode and the negative electrode, or may be attached to the surfaces of the positive electrode and the negative electrode.

In some embodiments, the separator is a solid-state electrolyte. The solid-state electrolyte is disposed between the positive electrode and the negative electrode, serving both to transport ions and to isolate the positive electrode and the negative electrode.

In some embodiments, the battery cell further includes an electrolyte that serves to conduct ions between the positive electrode and the negative electrode. The present application has no specific limitations on the type of the electrolyte, which can be selected according to needs. The electrolyte may be liquid-state, gel-state, or solid-state.

The liquid-state electrolyte includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from an ether solvent. The ether solvent may include one or more of dimethoxyethane, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel-state electrolyte includes a skeleton network with a polymer as an electrolyte, combined with an ionic liquid-lithium salt.

The solid-state electrolyte includes a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

As an example, the inorganic solid-state electrolyte may be one or more of an oxide solid electrolyte (crystalline perovskite, sodium superionic conductor, garnet, and amorphous LiPON thin film), a sulfide solid electrolyte (crystalline lithium superionic conductor (lithium germanium phosphorus sulfur, argyrodite), and amorphous sulfide), a halide solid electrolyte, a nitride solid electrolyte, and a hydride solid electrolyte.

As an example, the composite solid-state electrolyte is formed by adding an inorganic solid-state electrolyte filler to the polymer solid electrolyte.

In some embodiments, the electrode assembly is of a wound structure. The positive electrode plate and the negative electrode plate are wound to form a wound structure.

In some embodiments, the electrode assembly is of a stacked structure.

As an example, a plurality of positive electrode plates and a plurality of negative electrode plates may be provided, and the plurality of positive electrode plates and the plurality of negative electrode plates are alternately stacked.

As an example, a plurality of positive electrode plates may be provided, and the negative electrode plate is folded to form a plurality of stacked folded segments, with one positive electrode plate sandwiched between adjacent folded segments.

As an example, the positive electrode plate and the negative electrode plate are both folded to form a plurality of stacked folded segments.

As an example, a plurality of separators may be provided, and are separately disposed between any adjacent positive electrode plates or negative electrode plates.

As an example, the separators may be provided continuously, and are disposed between any adjacent positive electrode plates or negative electrode plates by means of folding or winding.

In some embodiments, the shape of the electrode assembly may be cylindrical, flat, multi-prismatic, or the like.

In some embodiments, the electrode assembly is provided with tabs that can conduct current out from the electrode assembly. The tab includes a positive electrode tab and a negative electrode tab.

In some embodiments, the battery cell may include a shell. The shell is configured to encapsulate components such as electrode assemblies and electrolytes. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch battery cell, or a battery cell of other shapes. The prismatic battery cell includes a square-housing battery cell, a blade-shaped battery cell, and a multi-prismatic battery, and the multi-prismatic battery is, for example, a hexagonal prismatic battery.

The battery mentioned in the embodiments of the present application refers to a single physical module including one or a plurality of battery cells to provide higher voltage and capacity.

In some embodiments, the battery may be a battery module, and when a plurality of battery cells are provided, the plurality of battery cells are disposed and fixed to form one battery module.

In some embodiments, the battery may be a battery pack. The battery pack includes a case and a battery cell, and the battery cell or the battery module is accommodated in the case.

In some embodiments, the case may be a part of the chassis structure of the vehicle. For example, a part of the case may become at least a part of the floor of the vehicle, or a part of the case may become at least a part of a crossmember and a longitudinal member of the vehicle.

In some embodiments, the battery may be an energy storage device. The energy storage device includes an energy storage container, an energy storage electrical cabinet, and the like.

Battery technology advancement requires consideration of various design factors at the same time, such as energy density, cycle life, discharge capacity, charging and discharging rate, and other performance parameters. In addition, the reliability of the battery also needs to be considered.

The pressure relief mechanism on the battery cell has important influence on the reliability of the battery cell. For example, in the case of a short circuit, overcharging, or the like, thermal runaway may occur within the battery cell, resulting in a rapid increase in pressure. In this case, the internal pressure can be relieved outward by activating the pressure relief mechanism, so as to prevent the battery cell from exploding and catching fire.

The pressure relief mechanism refers to an element or a component that is actuated to relieve the internal pressure when the internal pressure of the battery cell reaches a preset threshold. The design of the threshold varies depending on different design requirements. The threshold may depend on the material of one or more of the positive electrode plate, the negative electrode plate, the electrolyte, and the separator in the battery cell.

The pressure relief mechanism may take the form of an anti-explosion valve, a gas valve, a pressure relief valve, a safety valve, or the like, and may specifically adopt a pressure-sensitive element or configuration. That is, when the internal pressure of the battery cell reaches the preset threshold, the pressure relief mechanism performs an action or a weak part provided in the pressure relief mechanism ruptures, thereby forming an opening or a channel for relieving the internal pressure. Alternatively, the pressure relief mechanism may also adopt a temperature-sensitive element or configuration. That is, when the internal temperature of the battery cell reaches the preset threshold, the pressure relief mechanism performs an action, thereby forming an opening or channel for relieving the internal pressure.

The term "actuate" mentioned in the present application means that the pressure relief mechanism generates an action or is activated to a certain state, such that the internal pressure of the battery cell is relieved. The actions generated by the pressure relief mechanism may include, but are not limited to: rupture, fracture, tearing, or opening of at least part of the pressure relief mechanism. When the pressure relief mechanism is actuated, high-temperature and high-pressure substances inside the battery cell are discharged outwards from the actuated part as emissions. In this way, the battery cell can be subjected to pressure relief under the condition of controllable pressure, such that the potential more serious accident is avoided.

The emissions from the battery cell mentioned in the present application include, but are not limited to: an electrolyte, dissolved or fragmented positive and negative electrode plates, fragments of a separator, high-temperature and high-pressure gas generated by reaction, flame, and the like.

In the related art, the battery cell is generally provided with an insulating member. The insulating member can insulate and isolate at least part of the shell from the electrode assembly, thereby reducing the risk of electrical conduction between the positive electrode and the negative electrode of the electrode assembly due to the shell.

However, the insulating member may separate the electrode assembly from the pressure relief mechanism disposed on the shell. When thermal runaway occurs in the battery cell, the high-temperature and high-pressure substances discharged by the electrode assembly will be blocked by the insulating member, resulting in a decrease in the discharge rate of the high-temperature and high-pressure substances. As a result, the battery cell fails to relieve pressure in a timely manner, leading to potential safety hazards.

In view of this, the embodiments of the present application provide a technical solution in which through holes are formed in the insulating member to provide channels for high-temperature and high-pressure substances when thermal runaway occurs in the electrode assembly. This reduces the blockage of the high-temperature and high-pressure substances by the insulating member, and enables the battery cell to relieve pressure in a timely manner, thereby improving reliability.

The battery cell described in the embodiments of the present application is applicable to batteries and electric devices that use batteries.

The battery cell, battery, and electric device disclosed in the embodiments of the present application can be used in electric devices that use batteries as the power source or in various energy storage systems that use batteries as the energy storage element. The electric device may be, but is not limited to, a mobile phone, a tablet, a laptop computer, an electric toy, an electric tool, an electric bicycle, an electric vehicle, a ship, a spacecraft, and the like. The electric toys may include stationary or mobile electric toys, such as game consoles, electric car toys, electric ship toys, or electric airplane toys. The spacecrafts may include airplanes, rockets, space shuttles, spaceships, and the like.

For ease of explanation, the following embodiments will be described by taking a vehicle as an example of the electric device.

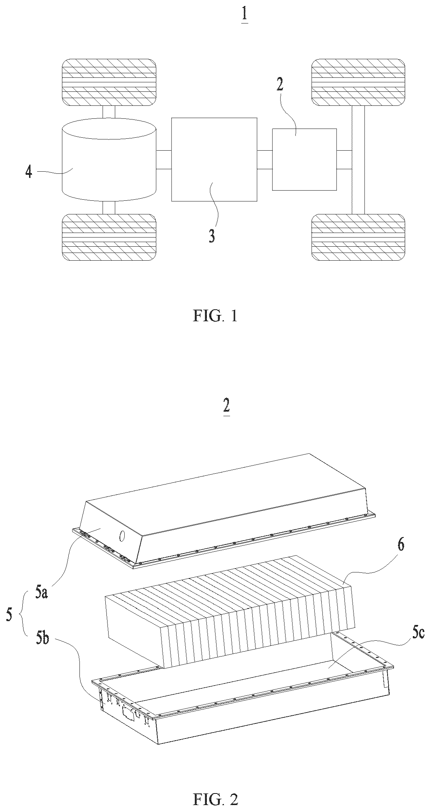

FIG. 1 is a structural schematic view of a vehicle according to some embodiments of the present application.

As shown in FIG. 1, a battery 2 is provided inside a vehicle 1, and the battery 2 may be provided at the bottom, the head, or the tail of the vehicle 1. The battery 2 may be configured to power the vehicle 1. For example, the battery 2 may serve as an operation power source of the vehicle 1.

The vehicle 1 may further include a controller 3 and a motor 4. The controller 3 is configured to control the battery 2 to power the motor 4, e.g., for operation power needed by the vehicle 1 for start-up, navigation, and driving.

In some embodiments of the present application, the battery 2 may not only serve as the operation power source for the vehicle 1, but also as a driving power source for the vehicle 1 to, instead of or in part instead of fuel or natural gas, provide driving power for the vehicle 1.

FIG. 2 is an exploded schematic view of a battery according to some embodiments of the present application. As shown in FIG. 2, the battery 2 includes a case 5 and a battery cell (not shown in FIG. 2). The battery cell is accommodated in the case 5.

The case 5 is configured to accommodate the battery cell, and the case 5 may be of various structures. In some embodiments, the case 5 may include a first case part 5a and a second case part 5b. The first case part 5a and the second case part 5b are mutually lidded with each other. The first case part 5a and the second case part 5b jointly define an accommodating space 5c for accommodating the battery cell. The second case part 5b may be of a hollow structure with one end open, the first case part 5a is of a plate-like structure, and the first case part 5a lids the open side of the second case part 5b to form the case 5 having the accommodating space 5c. The first case part 5a and the second case part 5b may each also be of a hollow structure with one end open, and the open side of the first case part 5a lids the open side of the second case part 5b to form the case 5 having the accommodating space 5c. Certainly, the first case part 5a and the second case part 5b may be of various shapes, such as a cylinder and a rectangular parallelepiped.

To improve the sealing performance after the first case part 5a and the second case part 5b are connected, a sealing member, such as a sealant or a seal ring, may be further disposed between the first case part 5a and the second case part 5b.

If the first case part 5a lids the top of the second case part 5b, the first case part 5a may also be referred to as an upper case cover, and the second case part 5b may also be referred to as a lower case body.

In the battery 2, one or a plurality of battery cells 6 may be provided. If a plurality of battery cells 6 are provided, the plurality of battery cells 6 may be connected in series, in parallel, or in series-parallel. The series-parallel connection means that both series connection and parallel connection are present in the connection of the plurality of battery cells 6. The plurality of battery cells 6 may be directly connected in series, in parallel, or in series-parallel, and then the whole formed by the plurality of battery cells 6 is accommodated in the case 5. Certainly, the situation may be that the plurality of battery cells 6 are first connected in series, in parallel, or in series-parallel to form battery modules, and then the plurality of battery modules are connected in series, in parallel, or in series-parallel to form a whole and accommodated in the case 5.

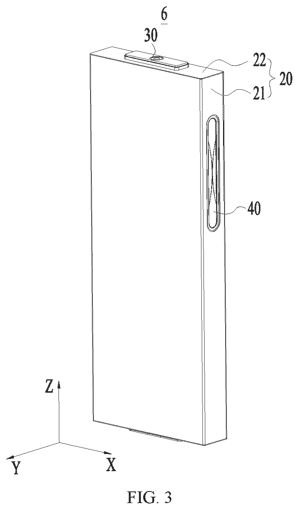

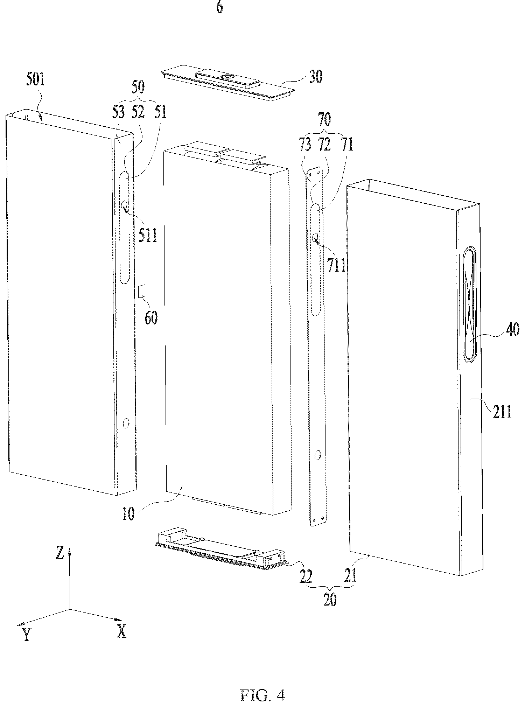

FIG. 3 is a structural schematic view of a battery cell according to some embodiments of the present application; FIG. 4 is an exploded schematic view of the battery cell shown in FIG. 3.

Referring to FIGs. 3 and 4, the embodiments of the present application provide a battery cell 6. The battery cell includes a shell 20 and an electrode assembly 10. The electrode assembly 10 is accommodated in the shell 20.

The shell 20 is of a hollow structure, and an accommodating space configured to accommodate the electrode assembly 10 and the electrolyte is formed therein. The shape of the shell 20 may be determined according to the specific shape of the electrode assembly 10. For example, if the electrode assembly 10 is of a rectangular parallelepiped structure, a rectangular parallelepiped shell may be selected; if the electrode assembly 10 is of a cylindrical structure, a cylindrical shell may be selected.

The shell 20 may be made of various materials. For example, the shell 20 may be made of metal or plastic. Optionally, the shell 20 may be made of copper, iron, aluminum, steel, aluminum alloy, or the like.

The electrode assembly 10 includes a positive electrode plate and a negative electrode plate. Illustratively, the electrode assembly 10 generates electric energy through oxidation and reduction reactions that occur when ions are intercalated into/deintercalated from the positive electrode plate and the negative electrode plate. Optionally, the electrode assembly 10 further includes a separator. The separator is configured to insulate and isolate the positive electrode plate from the negative electrode plate.

The electrode assembly 10 may be a wound electrode assembly, a stacked electrode assembly, or other types of electrode assemblies.

One or a plurality of electrode assemblies 10 may be provided. When a plurality of electrode assemblies 10 are provided, the plurality of electrode assemblies 10 may be arranged in a stacking manner. Illustratively, as shown in FIG. 4, one electrode assembly 10 is provided.

In some embodiments, the shell 20 includes a shell body 21 and an end cover 22. The shell body 21 has an opening, and the end cover 22 is configured to lid the opening.

The shell body 21 is a component configured to form the internal cavity of the battery cell 6 in combination with the end cover 22. The formed internal cavity may be used to accommodate the electrode assembly 10, electrolyte, and other components.

The shell body 21 and the end cover 22 may be separate components. Illustratively, an opening may be formed in the shell body 21, and the end cover 22 lids the opening to form the internal cavity of the battery cell 6.

The shell body 21 may be in various shapes and sizes, such as a rectangular parallelepiped, a cylinder, and a hexagonal prism. Specifically, the shape of the shell body 21 may be determined according to the specific shape and size of the electrode assembly 10. The shell body 21 may be made of a plurality of materials, such as copper, iron, aluminum, stainless steel, and aluminum alloy, which is not specifically limited in the embodiments of the present application.

The shape of the end cover 22 may be adapted to the shape of the shell body 21 to match the shell body 21. The end cover 22 and the shell body 21 may be made of the same or different materials. Optionally, the end cover 22 may be made of a material with a certain hardness and strength (for example, copper, iron, aluminum, stainless steel, aluminum alloy, plastic, or the like), such that the end cover 22 is not easily deformed when being compressed or collided. This provides the battery cell 6 with higher structural strength and improved reliability.

The end cover 22 is connected to the shell body 21 by welding, bonding, snap-fitting, or other methods.

The shell body 21 may have one end open, or may have two ends open. In some examples, the shell body 21 may be of a structure with one side open. One end cover 22 is provided and lids the shell body 21. In some other examples, the shell body 21 may also be of a structure with two sides open. Two end covers 22 are provided, and the two end covers 22 lid the two openings of the shell body 21, respectively.

In some embodiments, the battery cells 6 further include an electrode terminal 30. The electrode terminal 30 may be configured to be electrically connected to the electrode assembly 10 for outputting electric energy from the battery cell 6 or inputting electric energy to the battery cell 6.

In some embodiments, the electrode terminal 30 is disposed on the end cover 22. Illustratively, the shell body 21 may also be of a structure with two sides open. The battery cell 6 includes two end covers 22 and two electrode terminals 30. The two electrode terminals 30 are mounted on the two end covers 22, respectively, and the two electrode terminals 30 are electrically connected to the positive electrode plate and the negative electrode plate, respectively.

In some embodiments, the battery cell 6 further includes a pressure relief mechanism 40 disposed on the shell 20. Illustratively, the pressure relief mechanism 40 may be disposed on the end cover 22, or may be disposed on the shell 20.

In some embodiments, the battery cell 6 further includes a first insulating member 50. The first insulating member 50 is disposed in the shell 20. The first insulating member 50 can be configured to separate at least a part of the electrode assembly 10 from the case 20, thereby reducing the risk of electrical conduction between the positive electrode and the negative electrode of the electrode assembly 10 due to the shell 20.

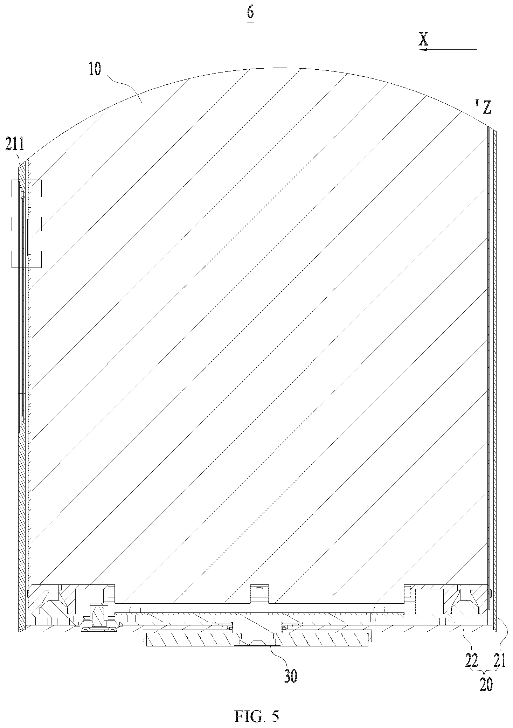

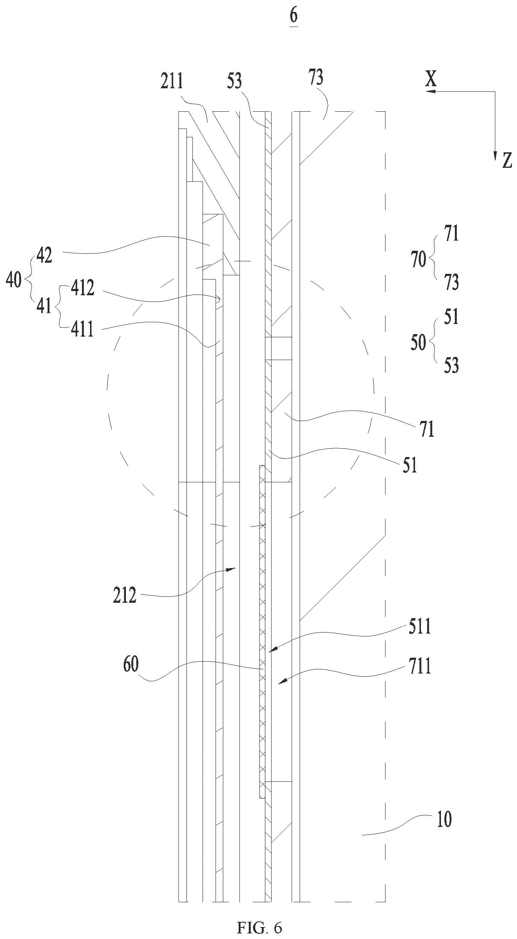

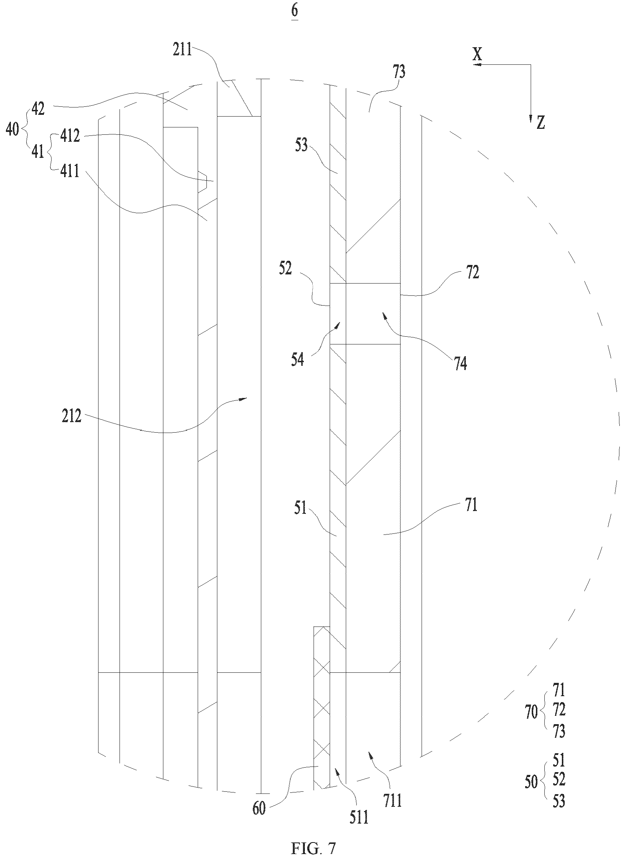

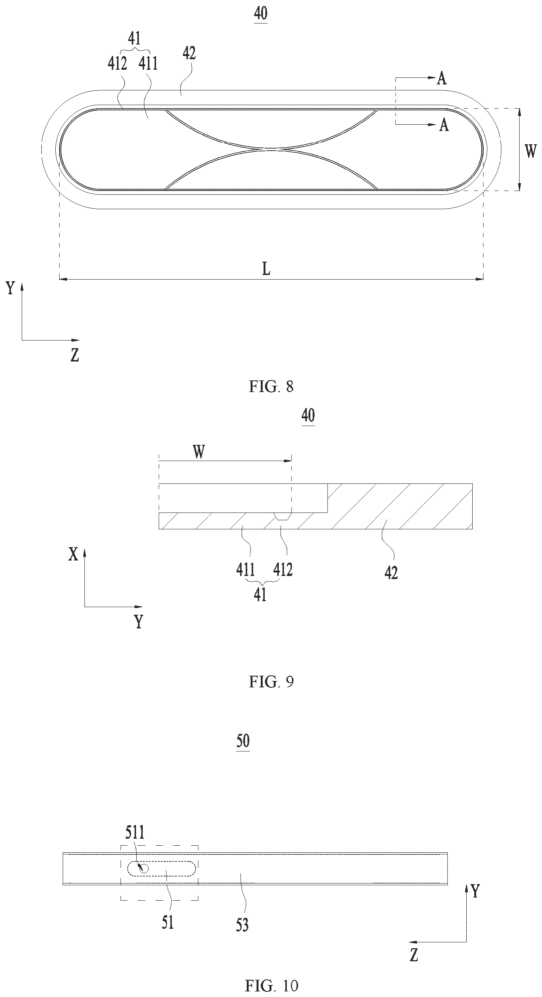

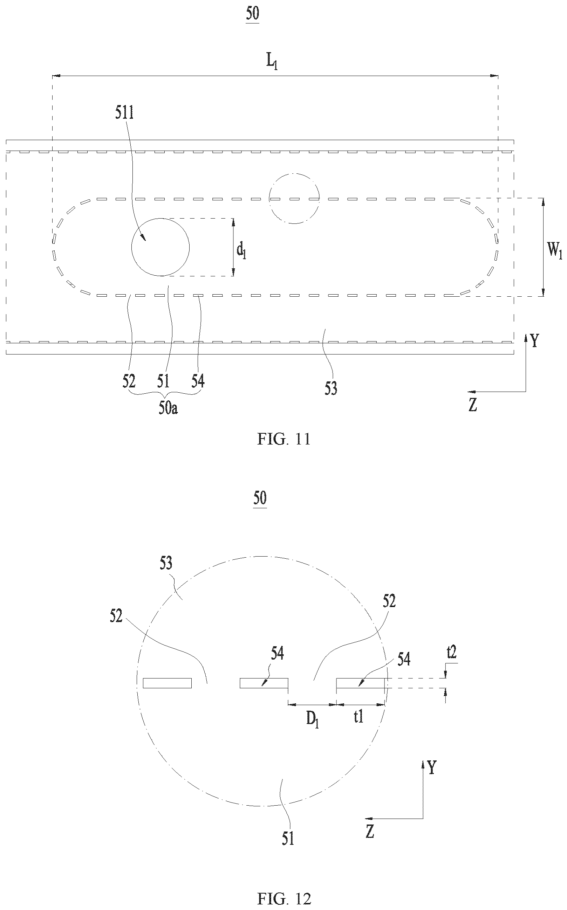

FIG. 5 is a partial cross-sectional schematic view of a battery cell according to some embodiments of the present application; FIG. 6 is an enlarged view of the boxed portion in FIG. 5; FIG. 7 is an enlarged view of the circled portion in FIG. 6; FIG. 8 is a schematic view from a top view of a pressure relief mechanism of a battery cell according to some embodiments of the present application; FIG. 9 is a partial cross-sectional view taken along the direction of A-A in FIG. 8; FIG. 10 is a schematic view of a first insulating member of a battery cell according to some embodiments of the present application; FIG. 11 is an enlarged view of the boxed portion in FIG. 10; and FIG. 12 is an enlarged view of the circled portion in FIG. 11.

Referring to FIGs. 4 to 10, some embodiments of the present application provide a battery cell 6. The battery cell includes a shell 20, an electrode assembly 10, a pressure relief mechanism 40, and a first insulating member 50. The shell 20 includes a wall part 211. The electrode assembly 10 is accommodated in the shell 20. The pressure relief mechanism 40 is disposed on the wall part 211. The pressure relief mechanism 40 includes a pressure relief body 411 and a first weak part 412 disposed around the pressure relief body 411. The pressure relief body 411 and the first weak part 412 form a first pressure relief zone 41. At least part of the first insulating member 50 is disposed between the first pressure relief zone 41 and the electrode assembly 10. The first insulating member 50 is provided with a first through hole 511. In a thickness direction X of the wall part 211, the projection of the first through hole 511 is located within the projection of the first pressure relief zone 41.

As an example, the wall part 211 may be the end cover 22 or a wall of the shell body 21.

As an example, the shape of the wall part 211 may be circular, rectangular, elliptical, or in other shapes.

In some examples, the pressure relief mechanism 40 and the shell 20 are independently formed members, and the two may be connected by welding, bonding, or other methods. For example, a pressure relief hole 212 is formed in the shell 20, and the pressure relief hole 212 penetrates through the shell 20. The pressure relief mechanism 40 is mounted on the shell 20 and covers the pressure relief hole 212, so as to separate the spaces on the inner and outer sides of the shell 20. In an alternative embodiment, the pressure relief mechanism 40 and the shell 20 may also be an integrally formed structure.

The first weak part 412 is a part of the pressure relief mechanism 40 that is prone to rupture, fracture, tearing or opening. Illustratively, the strength of the first weak part 412 is less than the strength of the pressure relief body 411.

The first weak part 412 may be formed in different ways. In some examples, a predetermined zone of the pressure relief mechanism 40 is subjected to thinning processing, and the thinned part of the pressure relief mechanism 40 forms the first weak part 412. In some other examples, a predetermined zone of the pressure relief mechanism 40 is subjected to material processing, such that the strength of this zone is weaker than the strength of other zones. In other words, this zone is the first weak part 412.

The pressure relief body 411 is configured to form a pressure relief channel when thermal runaway occurs in the battery cell 6. Illustratively, when the high-temperature and high-pressure substances released by the electrode assembly 10 act on the first weak part 412, the first weak part 412 ruptures, causing at least part of the pressure relief body 411 to disconnect from the shell 20. Under the impact of the high-temperature and high-pressure substances, the pressure relief body 411 flips or detaches from the shell 20 to form a pressure relief channel in the pressure relief mechanism 40.

In the thickness direction X of the wall part 211, the first insulating member 50 may be entirely located between the first pressure relief zone 41 and the electrode assembly 10, or may be only partially located between the first pressure relief zone 41 and the electrode assembly 10.

Illustratively, in the thickness direction X of the wall part 211, the first insulating member 50 may overlap with the pressure relief body 411 in an intersecting manner, or may overlap with the first weak part 412 in an intersecting manner, or may overlap with both the pressure relief body 411 and the first weak part 412 in an intersecting manner.

In the thickness direction X of the wall part 211, the projection of the first through hole 511 on the first pressure relief zone 41 may be located within the first weak part 412, or may be located within the pressure relief body 411, or may be partially located within the first weak part 412 and partially located in the pressure relief body 411.

In the embodiments of the present application, the first insulating member 50 can insulate and isolate a part of the first pressure relief zone 41 from the electrode assembly 10, so as to reduce the risk of electrical conduction between the first pressure relief zone 41 and the electrode assembly 10, thereby improving reliability. When thermal runaway occurs in the electrode assembly 10 and high-temperature and high-pressure substances are released, the high-temperature and high-pressure substances can pass through the first through hole 511 and act on the first pressure relief zone 41, so as to cause the first weak part 412 to rapidly rupture and form a pressure relief channel, thereby relieving pressure in time and reducing the risk of explosion. When the high-temperature and high-pressure substances pass through the first through hole 511, the high temperature acts on the hole wall of the first through hole 511 and melts the first insulating member 50, so as to increase the liquid passage area of the first through hole 511 and improve the discharge efficiency of the high-temperature and high-pressure substances, thereby improving the reliability of the battery cell 6.

Illustratively, during the production of the battery cell 6, metal particles may remain inside the shell 20. For example, when the end cover 22 is welded to the shell body 21, metal particles generated by welding may remain in the shell body 21. The first insulating member 50 can insulate and isolate a part of the first pressure relief zone 41 from the electrode assembly 10, thus reducing the risk of electrical conduction between the first pressure relief zone 41 and the electrode assembly 10 due to metal particles, thereby improving reliability.

In some embodiments, in the thickness direction X, the first insulating member 50 separates the first weak part 412 from the electrode assembly 10.

Illustratively, in the thickness direction X, the projection of the first weak part 412 is located within the projection of the first insulating member 50. Correspondingly, in the thickness direction X, the projection of the first weak part 412 does not overlap with the projection of the first through hole 511.

During the production or use of the battery cell 6, the active substance of the electrode assembly 10 may be at the risk of shedding (this phenomenon may be referred to as powder shedding). The first insulating member 50 can block, to a certain extent, the active substance shedding from the electrode assembly 10, and reduce the active substance attached to the first weak part 412, so as to reduce the risk of corrosion to the first weak part 412 and failure of the pressure relief mechanism 40, thereby improving the reliability of the battery cell 6.

In some embodiments, the battery cell 6 further includes a blocking member 60. In the thickness direction X, the blocking member 60 is located between the first insulating member 50 and the first pressure relief zone 41, and the projection of the first through hole 511 is located within the projection of the blocking member 60.

The blocking member 60 may be fixed to the first insulating member 50, or may be only stacked on the first insulating member 50 without being fixed.

The blocking member 60 can block the active substance shedding from the electrode assembly 10 and reduce the risk that the active substance layer comes into contact with the first pressure relief zone 41 via the first through hole 511, so as to reduce the risk of corrosion of the first weak part 412 and failure of the pressure relief mechanism 40, thereby improving the reliability of the battery cell 6. When thermal runaway occurs in the battery cell 6, the blocking member 60 can be discharged to the outside of the battery cell 6 via the pressure relief channel formed by the first pressure relief zone 41, which has little influence on the discharge of high-temperature substances.

In some embodiments, the blocking member 60 is made of an insulating material. The blocking member 60 can separate the first pressure relief zone 41 from the first through hole 511, so as to reduce the risk of electrical conduction between the first pressure relief zone 41 and the electrode assembly 10 via the first through hole 511, thereby improving the reliability of the battery cell 6.

In some embodiments, in the thickness direction X, the projection of the blocking member 60 is located within the projection of the pressure relief body 411, such that when thermal runaway occurs in the battery cell 6, the blocking member 60 can be more smoothly discharged to the outside of the battery cell 6.

In some embodiments, the blocking member 60 is connected to the first insulating member 50.

When the battery cell 6 is subjected to an external impact, the first insulating member 50 can limit the blocking member 60, so as to reduce the relative displacement between the blocking member 60 and the first through hole 511, and reduce the risk of opening the first through hole 511, thereby improving the reliability of the battery cell 6. When thermal runaway occurs in the battery cell 6, the blocking member 60 is disconnected from the first insulating member 50 under the internal pressure of the battery cell 6, thereby discharging to the outside of the battery cell 6 via the pressure relief channel formed by the first pressure relief zone 41.

In some embodiments, the blocking member 60 is bonded to the first insulating member 50. Illustratively, the blocking member 60 includes an adhesive tape.

Bonding is easy to implement and facilitates assembly. When thermal runaway occurs in the battery cell 6, the blocking member 60 bonded to the first insulating member 50 softens under the influence of high temperature, thereby enabling more rapid separation of the blocking member 60 from the first insulating member 50 and opening the first through hole 511.

In some embodiments, the melting point of the blocking member 60 is lower than the melting point of the first insulating member 50. When thermal runaway occurs in the battery cell 6, the blocking member 60 can rapidly melt to enable the opening of the first through hole 511.

In some embodiments, the pressure relief mechanism 40 further includes a connecting part 42. The connecting part 42 is configured to connect to the wall part 211, and the first weak part 412 is configured to connect the pressure relief body 411 and the connecting part 42.

The connecting part 42 may be connected to the wall part 211 by bonding, welding, or other methods. Alternatively, the connecting part 42 may be integrally formed with the wall part 211.

In some embodiments, the connecting part 42 surrounds the outer side of the first weak part 412.

In some embodiments, the wall part 211 is provided with a pressure relief hole 212, and the pressure relief mechanism 40 is mounted on the wall part 211 and covers the pressure relief hole 212.

Under normal conditions, the pressure relief mechanism 40 covers the pressure relief hole 212 to separate the spaces on the inner and outer sides of the wall part 211. When thermal runaway occurs in the battery cell 6, the pressure relief mechanism 40 ruptures along the first weak part 412 to enable the opening of the pressure relief hole 212, thereby allowing the high-temperature and high-pressure substances to be discharged from the pressure relief hole 212.

Illustratively, the pressure relief hole 212 is located on the side of the pressure relief mechanism 40 facing the electrode assembly 10.

In some embodiments, in the thickness direction X of the wall part 211, the projection of the first weak part 412 is located within the projection of the pressure relief hole 212. The first weak part 412 is aligned with the pressure relief hole 212, so as to reduce the risk of the first weak part 412 being crushed by the wall part 211 during the deformation of the wall part 211. Illustratively, the connecting part 42 is welded to the wall part 211. By positioning the first weak part 412 aligned with the pressure relief hole 212, the welding stress transmitted to the first weak part 412 can be reduced during the welding process, thereby reducing the risk of deformation of the first weak part 412, and prolonging the service life of the pressure relief mechanism 40.

In some embodiments, the first insulating member 50 is further provided with a second weak part 52 spaced apart from the first through hole 511.

The second weak part 52 is a part of the first insulating member 50 with relatively low strength, which is a part of the first insulating member 50 that is prone to rupture, fracture, tearing or opening. Illustratively, the strength of the second weak part 52 is less than the strength of the part of the first insulating member 50 proximal to the second weak part 52.

In the present application, a groove, score, through hole, or other structure may be provided in a predetermined zone of the first insulating member 50 to reduce the local strength of the first insulating member 50, thereby forming the second weak part 52 on the first insulating member 50. For example, a predetermined zone of the first insulating member 50 is subjected to thinning processing, and the thinned part of the first insulating member 50 forms the second weak part 52. In some other examples, a predetermined zone of the first insulating member 50 is subjected to material processing, such that the strength of this zone is weaker than the strength of other zones. In other words, this zone is the second weak part 52.

When thermal runaway occurs in the battery cell 6 and high-temperature and high-pressure substances are released, the second weak part 52 can rupture under the impact of the high-temperature and high-pressure substances, thereby forming a channel in the first insulating member 50 for the high-temperature and high-pressure substances to pass through. By providing the first insulating member 50 with both the first through hole 511 and the second weak part 52, the first insulating member 50 can rupture in a more timely manner when thermal runaway occurs in the battery cell 6, so as to reduce the blockage of the high-temperature and high-pressure substances by the first insulating member 50, improve the relief efficiency, and mitigate potential safety hazards, thereby improving the reliability of the battery cell 6.

In some embodiments, in the thickness direction X, the projection of the second weak part 52 is located within the projection of the first pressure relief zone 41. After the second weak part 52 ruptures, the high-temperature and high-pressure substances released by the electrode assembly 10 can act on the first pressure relief zone 41, so as to cause the first weak part 412 to rupture in time, thereby relieving pressure in time.

In some embodiments, the first insulating member 50 includes a first insulating part 51 and a second insulating part 53, and the second weak part 52 connects the first insulating part 51 and the second insulating part 53. In the thickness direction X, at least part of the first insulating part 51 is located between the electrode assembly 10 and the pressure relief body 411, and at least part of the second insulating part 53 is located between the wall part 211 and the electrode assembly 10. The first through hole 511 is disposed in the first insulating part 51.

The strength of the second weak part 52 is less than the strength of the first insulating part 51 and the strength of the second insulating part 53. Thus, the second weak part is a part of the first insulating member 50 that is prone to rupture, fracture, tearing or opening.

When the high-temperature and high-pressure substances released by the electrode assembly 10 act on the second weak part 52, the second weak part 52 ruptures, causing the first insulating part 51 to disconnect from the second insulating part 53 and detach from the second insulating part 53, thereby forming a channel in the first insulating member 50 for the high-temperature and high-pressure substances to pass through. The first through hole 511 is disposed in the first insulating part 51. When the high-temperature and high-pressure substances pass through the first through hole 511, the first insulating part 51 is easy to melt and deform, thereby accelerating the rupture of the second weak part 52.

The second insulating part 53 can insulate and isolate the wall part 211 from the electrode assembly 10, so as to reduce the risk of electrical conduction between the positive electrode and the negative electrode of the electrode assembly 10 due to the wall part 211, thereby improving reliability.

In some embodiments, the first through hole 511 may be arranged either concentrically or eccentrically with respect to the first insulating part 51. In other words, the central axis of the first through hole 511 may or may not coincide with the central axis of the first insulating part 51.

In some embodiments, the second weak part 52 is disposed along the outer periphery of the first insulating part 51. The second insulating part 53 surrounds the outer side of the first insulating part 51.

In some embodiments, in the thickness direction X, the projection of the first insulating part 51 is located within the projection of the first pressure relief zone 41.

When thermal runaway occurs in the battery cell 6, the first insulating part 51 can be discharged to the outside of the battery cell 6 via the pressure relief channel formed by the first pressure relief zone 41 after the rupture of the second weak part 52, so as to reduce the blockage of the high-temperature and high-pressure substances by the first insulating part 51, thereby improving the pressure relief efficiency.

In some embodiments, in the thickness direction X, the projection of the first insulating part 51 is located within the projection of the pressure relief body 411.

In some embodiments, the blocking member 60 is connected to the first insulating part 51.

In some embodiments, both the first insulating part 51 and the second insulating part 53 are of a flat-plate structure.

In some embodiments, in the thickness direction X, the projection of the first insulating part 51 and the projection of the second weak part 52 are both located within the projection of the pressure relief body 411.

According to the embodiments of the present application, when thermal runaway occurs in the battery cell 6, the risk that the pressure relief mechanism 40 blocks the first insulating part 51 can be reduced, thereby enabling the first insulating part 51 to be discharged in time to the outside of the battery cell 6 via the pressure relief channel formed by the first pressure relief zone 41.

In some embodiments, the first insulating member 50 is provided with a plurality of second through holes 54 and a plurality of second weak parts 52. The plurality of second through holes 54 and the plurality of second weak parts 52 are alternately arranged along the outer periphery of the first insulating part 51.

The second through hole 54 may be a square hole, a round hole, a triangular hole, or a through hole in other shapes.

By forming a plurality of second through holes 54 in the first insulating member 50, the strength of the plurality of second weak parts 52 can be reduced, thereby enabling the first insulating member 50 to rupture in a specified zone.

The hole diameter of the second through hole 54 is small, making it difficult for the electrode assembly 10 to pass through the second through hole 54. Illustratively, the second through hole 54 may be formed by a needling process, and the plurality of second through holes 54 are arranged to approximate a line formed by needling.

In some embodiments, the second through hole 54 is a rectangular hole, and a length t1 of the second through hole 54 ranges from 0.2 mm to 5 mm.

Illustratively, the length direction of the second through hole 54 is substantially parallel to the circumferential direction of the first insulating part 51.

By defining t1 to be greater than or equal to 0.2 mm, the number of second through holes 54 can be reduced, and the forming process can be simplified. By defining t1 to be less than or equal to 5 mm, the risk that active substance shedding from the electrode assembly 10 passes through the second through hole 54 can be reduced.

Optionally, t1 is 0.2 mm, 0.5 mm, 0.8 mm, 1 mm, 1.5 mm, 2 mm, 2.5 mm, 3 mm, 3.5 mm, 4 mm, 4.5 mm, or 5 mm.

In some embodiments, a width t2 of the second through hole 54 ranges from 0.1 mm to 1 mm.

By defining t2 to be greater than or equal to 0.1 mm, the forming of the second through hole 54 can be facilitated, and the forming process can be simplified. By defining t1 to be less than or equal to 1 mm, the risk that active substance shedding from the electrode assembly 10 passes through the second through holes 54 can be reduced.

Optionally, t2 is 0.1 mm, 0.2 mm, 0.3 mm, 0.4 mm, 0.5 mm, 0.6 mm, 0.7 mm, 0.8 mm, 0.9 mm, or 1 mm.

In some embodiments, along the circumferential direction of the first insulating part 51, the minimum distance D₁ between two adjacent second through holes 54 ranges from 0.5 mm to 5 mm.

D₁ is positively correlated with the strength of the second weak part 52. By defining D₁ to be greater than or equal to 0.5 mm, the risk that the second weak part 52 breaks when the battery cell 6 is subjected to an external impact can be reduced. By defining D₁ to be less than or equal to 5 mm, the second weak part 52 can break in time when thermal runaway occurs in the battery cell 6.

In some embodiments, the first insulating part 51, the plurality of second weak parts 52, and the plurality of second through holes 54 form a second pressure relief zone 50a. When thermal runaway occurs in the battery cell 6, the second pressure relief zone 50a can be used to form a channel for the high-temperature and high-pressure substances to pass through.

In some embodiments, in a length direction Z of the wall part 211, the maximum dimension of the first pressure relief zone 41 is L mm, and the maximum dimension of the second pressure relief zone 50a is L₁ mm. L and L₁ satisfy: L - 4 ≤ L₁ ≤ L.

According to the embodiments of the present application, by setting L₁ to be greater than or equal to L-4, the liquid passage area of the channel formed by the second pressure relief zone 50a can be increased when thermal runaway occurs in the battery cell 6. According to the embodiments of the present application, by setting L₁ to be less than or equal to L, the first insulating part 51 can be discharged in time from the pressure relief channel formed by the first pressure relief zone 41 when thermal runaway occurs in the battery cell 6.

In some embodiments, in a width direction Y of the wall part 211, the maximum dimension of the first pressure relief zone 41 is W mm, and the maximum dimension of the second pressure relief zone 50a is W₁ mm. W and W₁ satisfy: W - 4 ≤ W₁ ≤ W.

According to the embodiments of the present application, by setting W₁ to be greater than or equal to W-4, the liquid passage area of the channel formed by the second pressure relief zone 50a can be increased when thermal runaway occurs in the battery cell 6. According to the embodiments of the present application, by setting W₁ to be less than or equal to W, the first insulating part 51 can be discharged in time from the pressure relief channel formed by the first pressure relief zone 41 when thermal runaway occurs in the battery cell 6.

In some embodiments, in the width direction Y of the wall part 211, the maximum dimension of the first pressure relief zone 41 is W mm, and the diameter of the first through hole 511 is d₁ mm. W and d₁ satisfy: d₁ ≤ W - 1.

According to the embodiments of the present application, the risk that the zone of the pressure relief mechanism 40 other than the first pressure relief zone 41 is aligned with the first through hole 511 due to assembly error can be reduced, and the loss of the insulating area of the first insulating member 50 can be reduced, thereby improving the insulating property.

In some embodiments, the first insulating member 50 is provided with an accommodating cavity 501, and at least part of the electrode assembly 10 is accommodated in the accommodating cavity 501.

The first insulating member 50 can wrap around the electrode assembly 10 from all sides, so as to reduce the risk of electrical conduction between the electrode assembly 10 and the shell body 21 due to metal particles, thereby improving reliability.

Illustratively, the first insulating member 50 may be formed by bending one insulating sheet. The insulating sheet is bent to form a plurality of flat insulating plates. At least one of the insulating plates is composed of the first insulating part 51, the second insulating part 53, and the second weak part 52.

In some other alternative embodiments, the first insulating member 50 is of a flat-plate structure.

For example, the first insulating member 50 includes a support plate, which can support the electrode assembly 10. When the battery cell 6 is subjected to an external impact, the first insulating member 50 can reduce the shaking amplitude of the electrode assembly 10 inside the shell 20, thereby reducing the risk of powder shedding from the electrode plate of the electrode assembly 10 (i.e., detachment of active substance from the electrode plate) due to compression against the shell 20. The support plate can further increase the distance between the pressure relief mechanism 40 and the electrode assembly 10, thereby reducing the risk of the pressure relief mechanism 40 being crushed by the electrode assembly 10 during shaking.

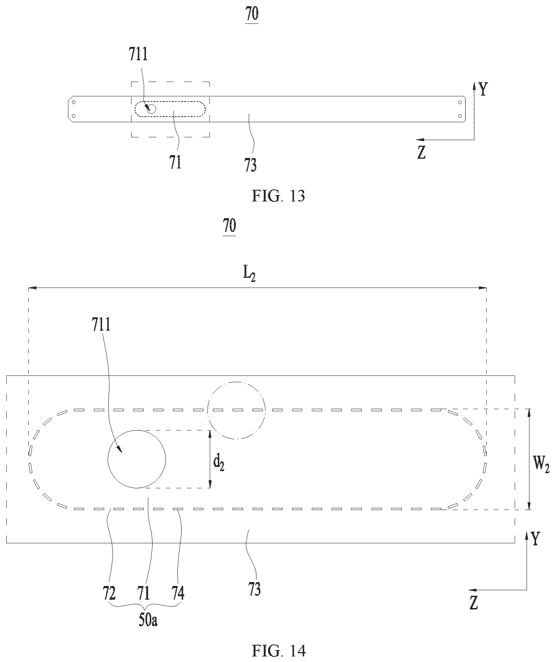

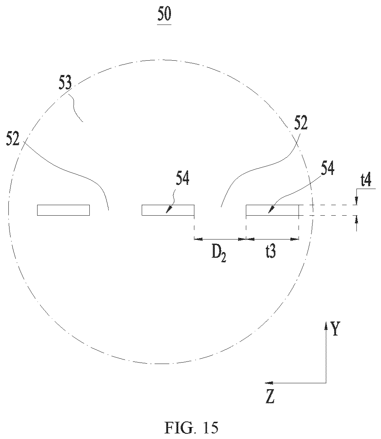

FIG. 13 is a schematic view of a second insulating member of a battery cell according to some embodiments of the present application; FIG. 14 is an enlarged view of the boxed portion in FIG. 13; and FIG. 15 is an enlarged view of the circled portion in FIG. 14.

In some embodiments, referring to FIGs. 4 to 15 together, the battery cell 6 further includes a second insulating member 70. In the thickness direction X, at least part of the second insulating member 70 is located between the first insulating member 50 and the electrode assembly 10.

The first insulating member 50 and the second insulating member 70 can achieve the effect of dual-layer insulation to reduce the risk of short circuit, thereby improving the reliability of the battery cell 6.

In some embodiments, the second insulating member 70 is provided with a third through hole 711. In the thickness direction X, the first through hole 511 is aligned with and in communication with the third through hole 711 along the thickness direction X.

Illustratively, in the thickness direction X, the first through hole 511 at least partially overlaps with the third through hole 711.

When thermal runaway occurs in the electrode assembly 10 and high-temperature and high-pressure substances are released, the high-temperature and high-pressure substances can pass through the third through hole 711 and the first through hole 511 and act on the first pressure relief zone 41, so as to cause the first weak part 412 to rupture and form a pressure relief channel, thereby relieving pressure in time and reducing the risk of explosion. When the high-temperature and high-pressure substances pass through the third through hole 711, the high temperature acts on the hole wall of the third through hole 711 and melts the second insulating member 70, so as to increase the liquid passage area of the third through hole 711 and improve the discharge efficiency of the high-temperature and high-pressure substances, thereby improving the reliability of the battery cell 6.

In some embodiments, in the thickness direction X, the projection of the first through hole 511 completely overlaps with the projection of the third through hole 711.

In some embodiments, the second insulating member 70 further includes a third weak part 72 spaced apart from the third through hole 711. In the thickness direction X, the projection of the third weak part 72 is located within the projection of the first pressure relief zone 41.

The third weak part 72 is a part of the second insulating member 70 with relatively low strength, which is a part of the second insulating member 70 that is prone to rupture, fracture, tearing or opening. Illustratively, the strength of the third weak part 72 is less than the strength of the part of the second insulating member 70 proximal to the third weak part 72.

When thermal runaway occurs in the battery cell 6 and high-temperature and high-pressure substances are released, the third weak part 72 can rupture under the impact of the high-temperature and high-pressure substances, thereby forming a channel in the second insulating member 70 for the high-temperature and high-pressure substances to pass through. By providing the second insulating member 70 with both the third through hole 711 and the third weak part 72, the second insulating member 70 can rupture in a more timely manner when thermal runaway occurs in the battery cell 6, so as to reduce the blockage of the high-temperature and high-pressure substances by the second insulating member 70, improve the relief efficiency, and mitigate potential safety hazards, thereby improving the reliability of the battery cell 6.

In some embodiments, the second insulating member 70 includes a third insulating part 71 and a fourth insulating part 73. The third weak part 72 connects the third insulating part 71 and the fourth insulating part 73. The third insulating part 71 is disposed between the first insulating part 51 and the electrode assembly 10. The third insulating part 71 is provided with a third through hole 711.

The strength of the third weak part 72 is less than the strength of the third insulating part 71 and the strength of the fourth insulating part 73. Thus, the third weak part is a part of the second insulating member 70 that is prone to rupture, fracture, tearing or opening.

When the electrode assembly 10 releases high-temperature and high-pressure substances, the third weak part 72, the second weak part 52, and the first weak part 412 rupture, and thus the first insulating part 51 and the third insulating part 71 can be discharged to the outside of the battery cell 6 via the pressure relief channel formed by the first pressure relief zone 41, so as to reduce the blockage of high-temperature and high-pressure substances by the first insulating part 51 and the third insulating part 71, thereby improving the pressure relief efficiency.

In some embodiments, the fourth insulating part 73 and the second insulating part 53 are stacked and connected along the thickness direction X.

Illustratively, the fourth insulating part 73 may be connected to the second insulating part 53 by fusing, bonding, snap-fitting, or other methods.

The fourth insulating part 73 and the second insulating part 53 are connected, such that the first insulating member 50 and the second insulating member 70 are limited relative to each other, thereby reducing the risk of misalignment between the first insulating part 51 and the third insulating part 71 when the battery cell 6 is subjected to an external impact.

In some embodiments, the fourth insulating part 73 is connected to the second insulating part 53 by fusing.

In some embodiments, the first insulating member 50 is further provided with a second weak part 52 spaced apart from the first through hole 511. In the thickness direction X, the projection of the second weak part 52 coincides with the projection of the third weak part 72, such that when thermal runaway occurs, the risk that the first insulating member 50 blocks the third insulating part 71 is reduced, thereby enabling the third insulating part 71 to be discharged to the outside of the battery cell 6 in time.

In some embodiments, in the thickness direction X, the projection of the first insulating part 51 coincides with the projection of the third insulating part 71.

In some embodiments, the first through hole 511 and the third through hole 711 are coaxially arranged.

The hole diameter of the first through hole 511 may be the same as or different from the hole diameter of the third through hole 711.

The first through hole 511 and the third through hole 711 may serve as positioning references to facilitate the assembly between the first insulating member 50 and the second insulating member 70.

In some embodiments, the second insulating member 70 is provided with a plurality of fourth through holes 74 and a plurality of third weak parts 72. The plurality of fourth through holes 74 and the plurality of third weak parts 72 are alternately arranged along the outer periphery of the third insulating part 71.

In some embodiments, the shape of the fourth through hole 74 is the same as the shape of the second through hole 54. Optionally, the dimension of the fourth through hole 74 is the same as the dimension of the second through hole 54.

In some embodiments, in the thickness direction X, the projections of the plurality of fourth through holes 74 coincide with the projections of the plurality of second through holes 54.

In some embodiments, the fourth through hole 74 is a rectangular hole, and a length t3 of the fourth through hole 74 ranges from 0.2 mm to 5 mm. In some embodiments, a width t4 of the fourth through hole 74 ranges from 0.1 mm to 1 mm.

In some embodiments, t1 is equal to t3, and t2 is equal to t4.

In some embodiments, along the circumferential direction of the third insulating part 71, the minimum distance D₂ between two adjacent fourth through holes 74 ranges from 0.5 mm to 5 mm.

In some embodiments, the third insulating part 71, the plurality of third weak parts 72, and the plurality of fourth through holes 74 form a third pressure relief zone 70a. When thermal runaway occurs in the battery cell 6, the third pressure relief zone 70a can be used to form a channel for the high-temperature and high-pressure substances to pass through.

In some embodiments, in a length direction Z of the wall part 211, the maximum dimension of the third pressure relief zone 70a is L₂ mm. L and L₂ satisfy: L - 4 ≤ L₂ ≤ L.

In some embodiments, in a width direction Y of the wall part 211, the maximum dimension of the third pressure relief zone 70a is W₂ mm. W and W₂ satisfy: W - 4 ≤ W₂ ≤ W.

In some embodiments, the diameter of the third through hole 711 is d₂ mm. W and d₂ satisfy: d₂ ≤ W - 1.

In some embodiments, in the thickness direction X, the projection of the third pressure relief zone 70a coincides with the projection of the second pressure relief zone 50a.

In some embodiments, as shown in FIG. 4, the first insulating member 50 is provided with an accommodating cavity 501, at least part of the electrode assembly 10 is accommodated in the accommodating cavity 501, and the second insulating member 70 is configured to support the electrode assembly 10.

The first insulating member 50 can wrap around the electrode assembly 10 from all sides, so as to reduce the risk of electrical conduction between the electrode assembly 10 and the shell body 21 due to metal particles, thereby improving reliability. When the battery cell 6 is subjected to an external impact, the second insulating member 70 can reduce the shaking amplitude of the electrode assembly 10 inside the shell 20, thereby reducing the risk of powder shedding from the electrode plate of the electrode assembly 10 (i.e., detachment of active substance from the electrode plate) due to compression against the shell 20.

Optionally, the second insulating member 70 is of a flat-plate structure. Optionally, the thickness of the second insulating member 70 is greater than the thickness of the first insulating member 50.

Illustratively, in the electric device, the pressure relief mechanism 40 faces downward, and the second insulating member 70 is located on the lower side of the electrode assembly 10 and supports the electrode assembly 10.

In some alternative embodiments, the second insulating member 70 is provided with an accommodating cavity, at least part of the electrode assembly 10 is accommodated in the accommodating cavity, and the first insulating member 50 is configured to support the electrode assembly 10.

Illustratively, the second insulating member 70 can wrap around the electrode assembly 10 from all sides, so as to reduce the risk of electrical conduction between the electrode assembly 10 and the shell body 21 due to metal particles, thereby improving reliability. When the battery cell 6 is subjected to an external impact, the first insulating member 50 can reduce the shaking amplitude of the electrode assembly 10 inside the shell 20, thereby reducing the risk of powder shedding from the electrode plate of the electrode assembly 10 (i.e., detachment of active substance from the electrode plate) due to compression against the shell 20.

Optionally, the first insulating member 50 is of a flat-plate structure. Optionally, the thickness of the first insulating member 50 is greater than the thickness of the first insulating member 50.

According to some embodiments of the present application, the present application further provides a battery. The battery includes a plurality of battery cells according to any one of the above embodiments.

According to some embodiments of the present application, the present application further provides an electric device. The electric device includes the battery according to any one of the above embodiments. The battery is configured to provide electric energy for the electric device. The electric device may be any one of the aforementioned devices or systems that use a battery.

Referring to FIGs. 3 to 15, the battery cell 6 according to some embodiments of the present application includes a shell 20, an electrode assembly 10, a pressure relief mechanism 40, a first insulating member 50, a second insulating member 70, and a blocking member 60.

The shell 20 includes a shell body 21 and an end cover 22. The shell body 21 has an opening, and the end cover 22 is configured to lid the opening. The shell body 21 and the end cover 22 cooperate to form an internal cavity of the battery cell 6. The electrode assembly 10 is accommodated in the internal cavity.

The shell body 21 includes a wall part 211, and the pressure relief mechanism 40 is disposed on the wall part 211. The wall part 211 is provided with a pressure relief hole 212, and the pressure relief mechanism 40 covers the pressure relief hole 212.

The pressure relief mechanism 40 includes a connecting part 42 and a first pressure relief zone 41, and the connecting part 42 surrounds the outer side of the first pressure relief zone 41 and is connected to the wall part 211. The first pressure relief zone 41 includes a pressure relief body 411 and a first weak part 412 disposed around the pressure relief body 411. The first weak part 412 connects the pressure relief body 411 and the connecting part 42.

The first insulating member 50 is provided with an accommodating cavity 501, and the second insulating member 70 and at least part of the electrode assembly 10 are accommodated in the accommodating cavity 501. The first insulating member 50 includes an insulating plate. In the thickness direction X of the wall part 211, the wall part 211, the insulating plate, and the second insulating member 70 are sequentially arranged, and the electrode assembly 10 is located on the side of the second insulating member 70 facing away from the insulating plate.

The insulating plate includes a first insulating part 51, a second insulating part 53, and a plurality of second weak parts 52. The plurality of second weak parts 52 connect the first insulating part 51 and the second insulating part 53. The first insulating part 51 is provided with a first through hole 511.

The first insulating member 50 is provided with a plurality of second through holes 54. The plurality of second through holes 54 and the plurality of second weak parts 52 are alternately arranged along the outer periphery of the first insulating part 51.

The first insulating part 51, the plurality of second weak parts 52, and the plurality of second through holes 54 form a second pressure relief zone 50a.

The second insulating member 70 includes a third insulating part 71, a fourth insulating part 73, and a plurality of third weak parts 72. The plurality of third weak parts 72 connect the third insulating part 71 and the fourth insulating part 73. The third insulating part 71 is provided with a third through hole 711.

The second insulating member 70 is provided with a plurality of fourth through holes 74. The plurality of fourth through holes 74 and the plurality of third weak parts 72 are alternately arranged along the outer periphery of the third insulating part 71.

The third insulating part 71, the plurality of third weak parts 72, and the plurality of fourth through holes 74 form a third pressure relief zone 70a.

In the thickness direction X of the wall part 211, the projection of the third pressure relief zone 70a and the projection of the second pressure relief zone 50a are both located within the projection of the first pressure relief zone 41. Optionally, in the thickness direction X of the wall part 211, the projection of the third pressure relief zone 70a coincides with the projection of the second pressure relief zone 50a.

The blocking member 60 is located on the side of the first insulating part 51 facing the wall part 211 and is bonded to the first insulating part 51, and the blocking member 60 covers the first through hole 511 in the thickness direction X of the wall part 211.

Although the present application has been described with reference to preferred embodiments, various modifications can be made and components herein can be replaced with equivalents without departing from the scope of the present application. In particular, the technical features mentioned in the embodiments may be combined in any manner as long as there are no structural conflicts. The present application is not limited to the specific embodiments disclosed herein but includes all the technical solutions that fall within the scope of the claims.

## Claims

1. A battery cell, comprising:
a shell comprising a wall part;
an electrode assembly accommodated in the shell;
a pressure relief mechanism disposed on the wall part, wherein the pressure relief mechanism comprises a pressure relief body and a first weak part disposed around the pressure relief body, and the pressure relief body and the first weak part form a first pressure relief zone; and
a first insulating member, wherein at least part of the first insulating member is disposed between the first pressure relief zone and the electrode assembly, the first insulating member is provided with a first through hole, and in a thickness direction of the wall part, a projection of the first through hole is located within a projection of the first pressure relief zone.

2. The battery cell according to claim 1, wherein in the thickness direction, the first insulating member separates the first weak part from the electrode assembly.

3. The battery cell according to claim 1 or 2, wherein the battery cell further comprises a blocking member; in the thickness direction, the blocking member is located between the first insulating member and the first pressure relief zone, and the projection of the first through hole is located within a projection of the blocking member.

4. The battery cell according to claim 3, wherein the blocking member is connected to the first insulating member.

5. The battery cell according to any one of claims 1 to 4, wherein the first insulating member is further provided with a second weak part spaced apart from the first through hole, and in the thickness direction, a projection of the second weak part is located within the projection of the first pressure relief zone.

6. The battery cell according to claim 5, wherein the first insulating member comprises a first insulating part and a second insulating part, and the second weak part connects the first insulating part and the second insulating part;
in the thickness direction, at least part of the first insulating part is located between the electrode assembly and the pressure relief body, and at least part of the second insulating part is located between the wall part and the electrode assembly;
the first through hole is disposed in the first insulating part.

7. The battery cell according to claim 6, wherein in the thickness direction, a projection of the first insulating part is located within the projection of the first pressure relief zone.

8. The battery cell according to claim 7, wherein in the thickness direction, the projection of the first insulating part and the projection of the second weak part are both located within a projection of the pressure relief body.

9. The battery cell according to any one of claims 6 to 8, wherein the first insulating member is provided with a plurality of second through holes and a plurality of second weak parts, and the plurality of second through holes and the plurality of second weak parts are alternately arranged along an outer periphery of the first insulating part.

10. The battery cell according to claim 9, wherein the second through hole is a rectangular hole, a length t1 of the second through hole ranges from 0.2 mm to 5 mm, and a width t2 of the second through hole ranges from 0.1 mm to 1 mm.

11. The battery cell according to claim 9 or 10, wherein along a circumferential direction of the first insulating part, a minimum distance D₁ between two adjacent second through holes ranges from 0.5 mm to 5 mm.

12. The battery cell according to any one of claims 9 to 11, wherein the first insulating part, the plurality of second weak parts, and the plurality of second through holes form a second pressure relief zone;
in a length direction of the wall part, a maximum dimension of the first pressure relief zone is L mm, a maximum dimension of the second pressure relief zone is L₁ mm, and L and L₁ satisfy: L - 4 ≤ L₁ ≤ L; and/or in a width direction of the wall part, a maximum dimension of the first pressure relief zone is W mm, a maximum dimension of the second pressure relief zone is W₁ mm, and W and W₁ satisfy: W - 4 ≤ W₁ ≤ W.

13. The battery cell according to any one of claims 1 to 12, wherein in the width direction of the wall part, the maximum dimension of the first pressure relief zone is W mm, and a diameter of the first through hole is d₁ mm;
W and d₁ satisfy: d₁ ≤ W - 1.

14. The battery cell according to any one of claims 1 to 13, wherein the battery cell further comprises a second insulating member; in the thickness direction, at least part of the second insulating member is located between the first insulating member and the electrode assembly;
the second insulating member is provided with a third through hole, and in the thickness direction, the first through hole is aligned with and in communication with the third through hole along the thickness direction.

15. The battery cell according to claim 14, wherein the second insulating member further comprises a third weak part spaced apart from the third through hole;
in the thickness direction, a projection of the third weak part is located within the projection of the first pressure relief zone.

16. The battery cell according to claim 15, wherein
the first insulating member comprises a first insulating part, a second insulating part, and a second weak part; the second weak part connects the first insulating part and the second insulating part, and the first through hole is disposed in the first insulating part;
the second insulating member comprises a third insulating part and a fourth insulating part, and the third weak part connects the third insulating part and the fourth insulating part;
the third insulating part is disposed between the first insulating part and the electrode assembly, and the third insulating part is provided with the third through hole.

17. The battery cell according to claim 16, wherein the fourth insulating part and the second insulating part are stacked and connected along the thickness direction.

18. The battery cell according to any one of claims 15 to 17, wherein
the first insulating member is further provided with the second weak part spaced apart from the first through hole;
in the thickness direction, the projection of the second weak part coincides with the projection of the third weak part.

19. The battery cell according to any one of claims 14 to 18, wherein the first through hole and the third through hole are coaxially arranged.

20. The battery cell according to any one of claims 14 to 19, wherein
the first insulating member is provided with an accommodating cavity, at least part of the electrode assembly is accommodated in the accommodating cavity, and the second insulating member is configured to support the electrode assembly; or
the second insulating member is provided with an accommodating cavity, at least part of the electrode assembly is accommodated in the accommodating cavity, and the first insulating member is configured to support the electrode assembly.

21. A battery, comprising the battery cell according to any one of claims 1 to 20.

22. An electric device, comprising the battery according to claim 21, wherein the battery is configured to provide electric energy.
